# DEMANDE DE BREVET EUROPEEN

(11) **EP 4 574 669 A1**
(43) Date de publication de la demande: **25.06.2025**
(21) Numéro de dépôt: 24205466.6
(22) Date de dépôt: 09.10.2024
(51) Int. Cl.: B64D 27/40

(54) **ASSEMBLAGE D'UN MÂT D'ACCROCHAGE AVEC UN MOTEUR D'AÉRONEF**

(30) Priorité: 22.12.2023 FR 2315130
(71) Demandeur: AIRBUS OPERATIONS (S.A.S.), 31060 Toulouse (FR)
(72) Inventeur: PAUTIS, Olivier, 31060 TOULOUSE (FR)
(74) Mandataire: Airbus-OPS SAS

(57) **Abrégé**

L'invention concerne un système d'attache moteur avant (363) pour aéronef comportant un assemblage solidaire d'une part, du mât d'accrochage, et d'autre part, d'un ensemble de ferrures avant (350) d'un moteur (302) ; l'assemblage étant situé à l'avant de l'ensemble mât d'accrochage/moteur et présentant d'une part un système d'articulation central (312) articulé à la chape du moteur (313) et deux systèmes d'articulation latéraux (318, 319) en liaison avec le moteur (302). Un tel système d'attache présente un encombrement réduit verticalement.

## Description

La présente invention concerne un assemblage d'un mât d'accrochage avec un moteur d'aéronef.

De manière classique, un aéronef comporte au moins un ensemble propulsif fixé sous chacune de ses ailes. Chaque ensemble propulsif comprend un moteur fixé sous l'aile au moyen d'un mât d'accrochage. Le mât d'accrochage présente une structure rigide fixée à l'aile et appelée « structure primaire ». L'assemblage du mât d'accrochage avec le moteur est réalisé au moyen d'un système d'attaches moteur comprenant, en particulier, une attache moteur avant 180 située à l'avant du mât d'accrochage et une attache moteur arrière située à l'arrière du mât d'accrochage.

La demande de brevet FR3113484 décrit un assemblage d'un mât d'accrochage avec un moteur d'un aéronef selon l'état de la technique. Selon cette demande de brevet, et en référence avec la figure 1, le mât d'accrochage comprend une structure primaire 104 sous la forme d'un caisson, fixé au moteur, à l'avant, par une attache moteur avant 180. Le moteur s'étend d'avant en arrière selon un axe longitudinal X1.

On appelle plan vertical médian V1, le plan passant par l'axe longitudinal X1, orthogonal au sol c'est-à-dire à l'horizontale et qui divise l'ensemble mât- moteur en deux parties bâbord et tribord.

La structure primaire 104 comprend des longerons supérieur et inférieur 104a, 104b formant respectivement les face supérieure et inférieure du caisson, des panneaux latéraux bâbord et tribord 104c,104d formant les parois latérales bâbord, respectivement tribord du caisson. Les parois et les longerons délimitent, à l'avant de la structure primaire 104, une ouverture 105. L'attache moteur avant 180 comprend un renfort transversal avant 110 comportant une plaque 111, positionnée approximativement dans un plan transversal au plan vertical médian V1, qui présente une face arrière F111 orientée vers la structure primaire 104. Le renfort transversal avant 110 comprend une forme saillante 112 par rapport à la face arrière F111 et qui est emboîtée dans l'ouverture 105. La plaque 111 s'étend respectivement, à bâbord du plan vertical médian V1 en saillie par rapport au panneau latéral bâbord 104c et à tribord du plan vertical médian V1 en saillie par rapport au panneau latéral tribord 104d.

L'attache moteur avant 180 comporte en outre :
- une première bielle 118 reliée au moteur 102 par un premier axe de liaison moteur 126b ainsi qu'une deuxième bielle 119 reliée au moteur par un deuxième axe de liaison moteur 126a, et chacune des première et deuxième bielles 118, 119 présente une forme en Y et comprend une seule branche à une première extrémité coopérant avec une chape 117 du moteur 102 et deux branches parallèles entre elles à une deuxième extrémité entre lesquelles est positionnée la plaque 111 ;
- un premier axe de liaison de renfort 124b reliant la première bielle 118 et le renfort transversal avant 110 et traversant la plaque 111 à bâbord du plan vertical médian V1 ainsi qu'un deuxième axe de liaison de renfort 124a reliant la deuxième bielle 119 et le renfort transversal avant 110 et traversant la plaque 111 à tribord du plan vertical médian V1.

L'assemblage d'un mât d'accrochage avec un moteur décrit dans la demande de brevet FR3113484 est pleinement satisfaisant en termes de tenue mécanique pour reprendre les efforts en provenance du moteur. Cependant, l'intégration de moteurs de grandes dimensions requiert une modification du design de l'assemblage décrit ci-dessus pour rapprocher le moteur du mât d'accrochage afin de conserver une garde au sol acceptable.

L'invention répond en tout ou partie à ce besoin. A cet effet, l'invention a pour objet un assemblage d'un mât d'accrochage avec un moteur d'aéronef selon la revendication 1.

L'invention a également pour objet un aéronef comprenant un tel assemblage. L'aéronef est revendiqué à la revendication 12.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la figure 1 déjà décrite, est une vue en perspective de l'avant d'un assemblage d'un mât d'accrochage avec un moteur selon l'état de la technique ;
la figure 2 est une vue de côté d'un aéronef comprenant un assemblage d'un mât d'accrochage avec un moteur conforme à un mode de réalisation de l'invention ;
La figure 3 est une vue en perspective, de l'arrière et d'un premier côté de l'assemblage représenté en figure 2, selon un premier mode de réalisation de l'invention ;
La figure 4 est une vue similaire à la figure 3, de l'arrière et d'un second côté de l'assemblage représenté en figure 2, selon un premier mode de réalisation de l'invention ;
La figure 5 est une vue en perspective arrière de l'assemblage représenté aux figures 3 et 4, dans lequel le mât d'accrochage est représenté en transparence ;
La figure 6 est une vue en perspective avant et en coupe selon l'axe A-A, de l'assemblage représenté en figure 3 ;

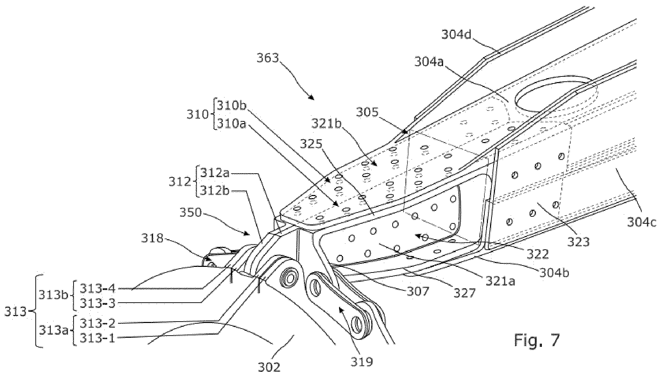

La figure 7 est une vue en perspective avant de l'assemblage représenté à la figure 2 selon un second mode de réalisation de l'invention, dans lequel le mât d'accrochage est représenté en transparence.

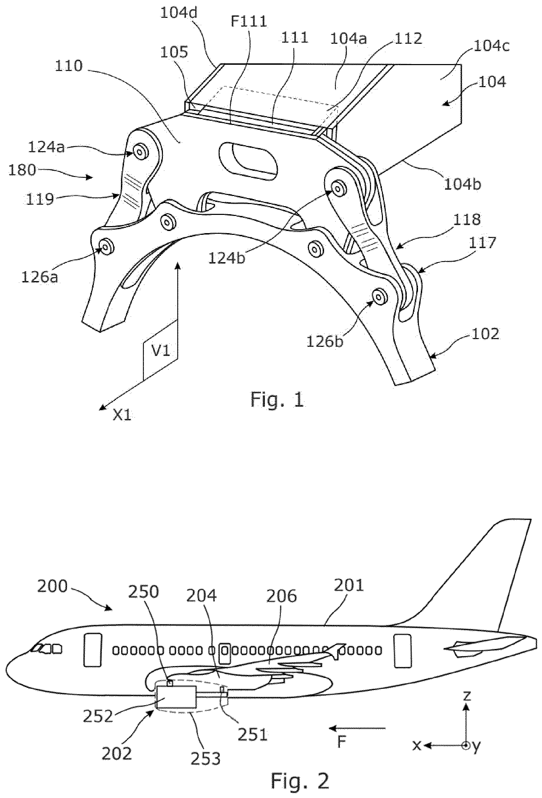

En relation avec la figure 2, un aéronef 200 comprend un fuselage 201 auquel est fixé, de chaque côté, une aile 206 sous laquelle est monté au moins un ensemble propulsif 202. Chaque ensemble propulsif 202 comprend un mât d'accrochage 204 fixé sous l'aile 206 et un moteur 252 fixé au mât d'accrochage 204. La liaison entre le mât d'accrochage et le moteur est obtenu au moyen d'une attache moteur avant 250 et d'une attache moteur arrière 251. L'enveloppe du moteur représentée en pointillée constitue la nacelle 253 du moteur.

Par convention, on appelle X, l'axe longitudinal du moteur et donc de l'ensemble propulsif 202. D'autre part, on appelle Y, l'axe transversal du moteur qui est horizontal lorsque l'aéronef est au sol, et Z, l'axe vertical ou hauteur verticale lorsque l'aéronef est au sol, ces trois directions X, Y et Z étant orthogonales entre elles.

D'autre part, les termes « avant » et « arrière » sont à considérer par rapport à une direction d'avancement de l'aéronef 200 lors du fonctionnement du moteur, cette direction étant représentée schématiquement par la flèche F sur les figures. De même les termes « bâbord » et « tribord » définissent les positions latérales au regard de la direction d'avancement, respectivement à gauche et à droite de l'aéronef.

Le moteur a une forme de révolution autour de l'axe longitudinal X.

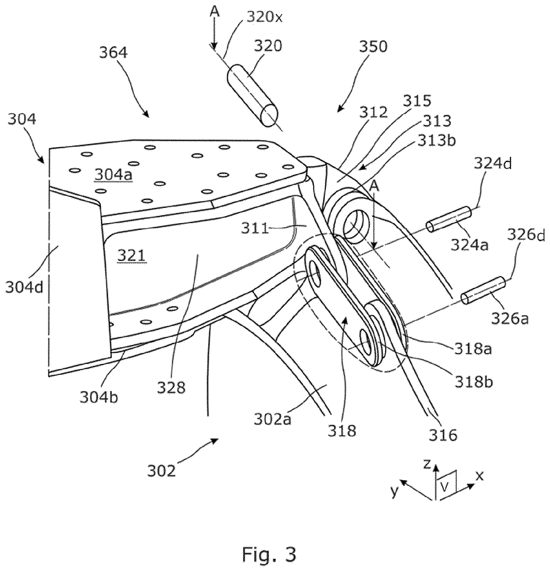

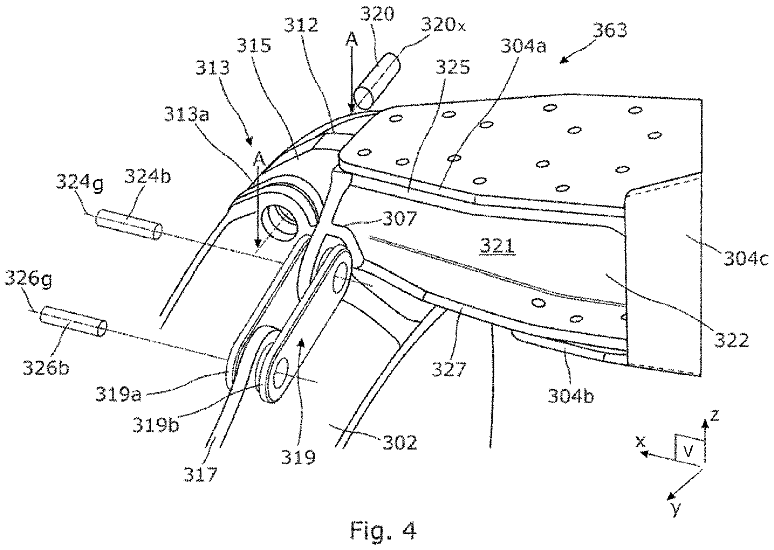

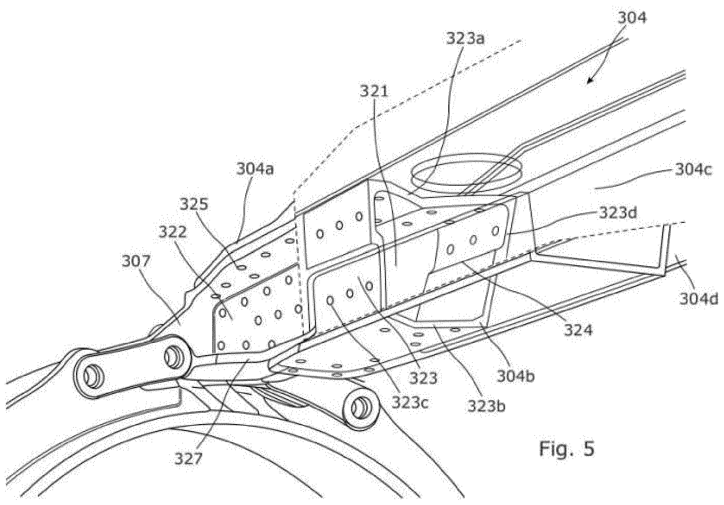

En référence avec les figures 3 à 6, le mât d'accrochage comprend une structure primaire 304 sous forme d'un caisson creux s'étendant d'avant en arrière selon l'axe longitudinal X. La structure primaire 304 est séparée en deux parties bâbord et tribord par un plan vertical médian longitudinal V, passant par l'axe longitudinal X, orthogonal au sol c'est-à-dire à l'horizontale. Les parties bâbord et tribord de la structure primaire 304 sont symétriques l'une de l'autre par rapport au plan vertical médian V.

La structure primaire 304 comprend une structure interne (non représentée) recouverte de panneaux dont un panneau supérieur plan, ou longeron supérieur 304a, qui forme la face supérieure du caisson, et un panneau inférieur plan, ou longeron inférieur 304b, qui forme la face inférieure du caisson et qui fait face au sol. Les panneaux comprenant en outre deux panneaux latéraux formant les côtés du caisson, dont un panneau latéral plan arrangé à bâbord du plan vertical médian V, dit panneau latéral bâbord 304c, et un panneau latéral plan arrangé à tribord du plan vertical médian V, dit panneau latéral tribord 304d.

Chacun des longerons supérieur 304a et inférieur 304b ainsi que les panneaux latéraux tribord 304d et bâbord 304c comprend une face intérieure orientée vers l'intérieur du caisson et une face extérieure orientée vers l'extérieur du caisson.

La fixation du moteur au mât d'accrochage est réalisée au moyen d'un système d'attaches moteur comprenant :
- une attache moteur arrière (non représentée) fixée d'une part au longeron inférieur et d'autre part à un ensemble de ferrures arrière solidaires du moteur, l'attache moteur arrière et l'ensemble de ferrures arrière étant situés à l'arrière de l'ensemble mât d'accrochage/moteur,
- une attache moteur avant 363 fixée d'une part au mât d'accrochage et d'autre part à un ensemble de ferrures avant 350 solidaires du moteur, l'attache moteur avant 363 et l'ensemble de ferrures avant étant situés à l'avant de l'ensemble mât d'accrochage/moteur.

L'attache moteur arrière et l'ensemble de ferrures arrière peuvent prendre toute forme connue de l'homme du métier et ne seront pas décrites plus avant.

L'ensemble de ferrures avant 350 comprend :
- une chape de fixation 313 à deux paires de branches, où les paires de branches 313a et 313b sont réparties de part et d'autre du plan médian vertical V. La paire de branche bâbord 313a comprend deux branches 313-1 et 313-2 situées à bâbord du médian vertical V, et la paire de branche tribord 313b comprend deux branches 313-3 et 313-4 situées à tribord du plan vertical médian V. Chacune des branches s'étend parallèlement au plan vertical médian V et comprend un alésage traversant dont l'axe d'alésage est parallèle à un axe 320x orienté transversalement au plan médian vertical V. Les axes des alésages des différentes branches sont alignés et confondus avec l'axe 320x et les alésages sont sensiblement identiques. Chacun desdits alésages traversants est équipé d'un manchon ;
- de deux pattes de fixation transversales, réparties de part et d'autre du plan médian vertical V, et de manière symétrique par rapport à ce dernier, définissant ainsi une patte de fixation transversale bâbord 317 située à bâbord du plan médian vertical V et une patte de fixation transversale tribord 316 située à tribord du plan vertical médian. Chaque patte de fixation transversale 316, 317 s'étend transversalement au plan vertical médian V. Chacune des pattes de fixation transversales 316, 317 comprend un alésage traversant dont l'axe d'alésage est orienté parallèlement à l'axe longitudinal X, avec un axe d'alésage 326d pour la patte de fixation transversale tribord 316 et un axe d'alésage 326g pour la patte de fixation transversale bâbord 317. Les alésages des pattes de fixation transversales bâbord 317 et tribord 316 sont sensiblement identiques avec un jeu radial différent et leurs axes symétriques par rapport au plan médian vertical V. Les alésages traversants de chacune des pattes de fixation transversale sont équipés d'un palier à rotule.

L'attache moteur avant 363 prend la forme d'un corps allongé s'étendant d'avant en arrière selon l'axe longitudinal X, et comprenant à son extrémité avant, une face avant plane 329 située dans un plan perpendiculaire à l'axe longitudinal X et, à son extrémité arrière, une face arrière. Le corps est emboîté en partie, à partir de sa face arrière, à l'intérieur de la structure primaire 304 et prolonge cette dernière vers l'avant. Le corps comprend sur sa face avant 329:
- un système d'articulation central 312 inséré entre deux branches de la chape 313 séparées entre elles du plan vertical médian V, et directement articulé à la chape 313 au moyen d'un premier axe d'articulation 320 s'étendant transversalement au plan médian vertical V et traversant la chape 313 et le système d'articulation central 312 ;
- deux systèmes d'articulation latéraux 318, 319, symétriques l'un de l'autre par rapport au plan médian vertical V, avec un système d'articulation latéral bâbord 319 situé à bâbord du plan médian vertical V et un système d'articulation latéral tribord 318 situé à tribord de ce même plan. Le système d'articulation latéral bâbord 319 est articulé à la patte de fixation transversale bâbord 317 au moyen d'un axe d'articulation 326b parallèle à l'axe longitudinal X et le système d'articulation latéral tribord 318 est articulé à la patte de fixation transversale tribord 316 au moyen d'un troisième axe d'articulation 326a parallèle à l'axe longitudinal X. Les deux pattes de fixations transversales 316, 317 sont situées en arrière de la chape 313.

Le premier axe d'articulation 320 du système d'articulation central 312 avec la chape 313 s'étend entre un plan selon lequel s'étend le longeron supérieur 304a et un plan selon lequel s'étend le longeron inférieur 304b. Ainsi, avec cette disposition, le moteur est situé au plus proche du mât d'accrochage.

Dans un premier mode de réalisation de l'invention illustré avec les figures 3, 4, 5 et 6, le corps comprend une poutre 321 s'étendant selon l'axe longitudinal X et le système d'articulation central 312 et les systèmes d'articulation latéraux 318 et 319 sont usinés d'un seul bloc avec la poutre 321.

La poutre 321 comprend une face avant plane 329 formant la face avant du corps et située à l'extrémité avant de la poutre 321, une face arrière située à l'extrémité arrière de la poutre 321 et formant la face arrière du corps, et par laquelle la poutre 321 est emboîtée dans la structure primaire 304.

La poutre 321 comprend une face supérieure 325, une face inférieure 327, une face latérale bâbord 322 et une face latérale tribord 328. Chaque face de la poutre 321, comprend dans la partie arrière de la poutre 321, une semelle 323 pour la fixation de la poutre 321 à la structure primaire 304, avec respectivement, une semelle supérieure 323a pour la fixation de la poutre 321 à la face intérieure du longeron supérieur 304a, une semelle inférieure 323b pour la fixation de la poutre 321 à la face intérieure du longeron inférieur 304b, ainsi que deux semelles latérales, bâbord 323c et tribord 323d, pour la fixation de la poutre 321 à respectivement, la face intérieure du panneau latéral bâbord 304c, respectivement panneau latéral tribord 304d. Chaque semelle est conformée pour épouser la forme de la face intérieure du longeron ou du panneau auquel elle est fixée. La fixation de la poutre 321 à la structure primaire 304 est effectuée par boulonnage ou soudage ou tout autre moyen connu.

Le système d'articulation central 312 prend la forme d'une patte de fixation plane, dite patte de fixation centrale 315, fixée à la face avant 329 de la poutre 321 et s'étendant parallèlement au plan médian vertical V en avant de la poutre 321. La patte de fixation centrale 315 a des dimensions identiques de chaque côté du plan médian vertical V. La patte de fixation centrale 315 est percée d'un alésage traversant dont l'axe d'alésage est parallèle à un axe 320x orienté transversalement au plan médian vertical V. L'alésage traversant de la patte de fixation centrale 315 est équipé d'un palier à rotule.

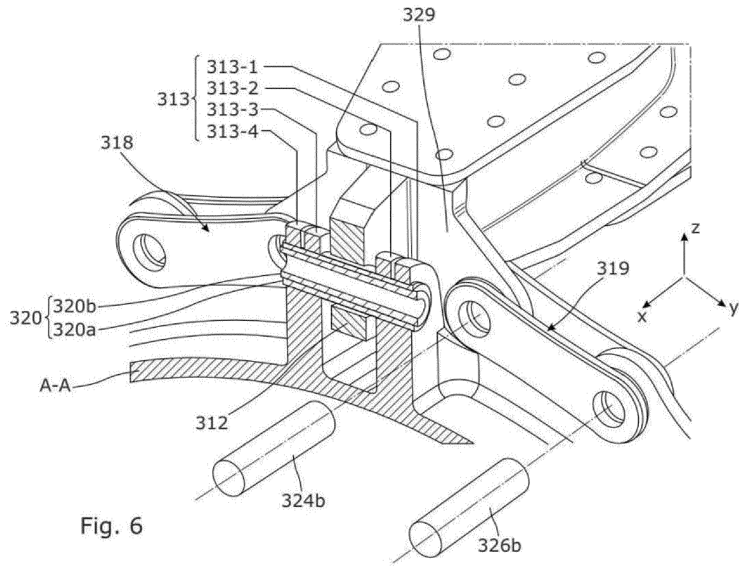

L'articulation de la patte de fixation centrale 315 à la chape 313 est effectuée au moyen d'un axe d'articulation 320 s'étendant transversalement au plan médian vertical. Ledit axe d'articulation 320 est emmanché dans le palier à rotule de la patte de fixation centrale 315 et de part et d'autre de ce palier à rotule, dans les manchons montés dans les alésages d'une paire de branche de la chape 313. Comme illustré à la figure 6, ce premier axe d'articulation 320 est, de préférence, doublé et comprend deux parties coaxiales 320a, dit axe principal, et 320b, dit axe secondaire, de diamètres différents. L'axe principal 320a est dans une première partie engagée, reprenant un chemin primaire d'efforts par un montage ajusté avec l'alésage traversant de la patte de fixation centrale 315 et l'axe secondaire 320b est dans une position en attente et devient actif et reprend les efforts, en cas de rupture de l'axe principal.

Les montages ajustés avec un jeu radial minimal permettent un transfert des efforts directement d'une pièce à l'autre, tandis que la présence d'un jeu radial plus important ne permet pas le transfert des efforts directement. Ce transfert d'efforts ne devient possible que si un élément du chemin primaire d'efforts est défaillant et que deux éléments qui sont montés avec jeu l'un par rapport à l'autre se déplacent pour annuler le jeu et venir en contact, et ainsi assurer le transfert d'efforts via un second chemin d'effort.

Le système d'articulation latéral bâbord 319 comprend une extension plane, dite extension bâbord 307, et une paire de bielles droites, dite paire de bielles bâbord 319a, 319b articulée à l'extension bâbord 307 et prenant l'extension bâbord 307 en sandwich. L'extension bâbord 307 s'étend en saillie à bâbord de la face avant 329 du corps et dans le même plan que la face avant 329 du corps. L'extension bâbord 307 prolonge ainsi la face avant 329 du côté bâbord, au-delà du plan selon lequel s'étend le panneau latéral bâbord 304c.

De manière similaire, le système d'articulation latéral tribord 318 comprend une extension plane, dite extension tribord 311, et une paire de bielles droites, dite paire de bielles tribord 318a, 318b articulée à l'extension tribord 311 et prenant l'extension tribord 311 en sandwich. L'extension tribord 311 s'étend en saillie à tribord de la face avant 329 du corps et dans le même plan que la face avant 329 du corps. L'extension tribord 311 prolonge ainsi la face avant 329 du côté tribord, au-delà du plan selon lequel s'étend le panneau latéral tribord 304d.

Chacune des extensions bâbord 307 et tribord 311 est percée d'un alésage traversant, avec un alésage traversant bâbord selon l'axe d'alésage 324g sur l'extension bâbord 307 et un alésage traversant tribord selon l'axe d'alésage 324d sur l'extension tribord 311. Chacun desdits alésages a un axe d'alésage orienté parallèlement au plan médian vertical V. Les deux alésages traversants bâbord et tribord sont symétriques l'un de l'autre par rapport au plan médian V et chacun des alésages est équipé d'un palier à rotule.

Les bielles de la paire de bielles tribord 318a, 318b et de la paire de bielles bâbord 319a, 319b sont identiques. Chaque bielle comprend deux extrémités, et un alésage traversant chacune des extrémités de la bielle.

Chaque bielle de la paire de bielles bâbord 319a, 319b est montée articulée à sa première extrémité à l'extension bâbord 307 au moyen d'un axe d'articulation 324b s'étendant parallèlement à l'axe longitudinal X.

L'articulation entre la paire de bielles bâbord 319a, 319b et l'extension bâbord 307 est effectuée par une liaison de type chape avec un quatrième axe d'articulation 324b emmanché dans le palier à rotule de l'extension bâbord 307 et de chaque côté de ce palier à rotule, dans un manchon (non représenté) monté dans l'alésage traversant arrangé à la première extrémité de chaque bielle de la paire de bielles bâbord 319a, 319b.

Chaque bielle de la paire de bielles tribord 318a, 318b est montée articulée à sa première extrémité à l'extension tribord 311 au moyen d'un cinquième axe d'articulation 324a s'étendant parallèlement à l'axe longitudinal X.

L'articulation entre la paire de bielles tribord 318a, 318b et l'extension tribord 311 est effectuée par une liaison de type chape avec un cinquième axe d'articulation 324a emmanché dans le palier à rotule de l'extension tribord 311 et de chaque côté de ce palier à rotule, dans un manchon (non représenté) monté dans l'alésage traversant arrangé à la première extrémité de chaque bielle de la paire de bielles tribord 318a, 318b.

La paire de bielles bâbord 319a, 319b prend la patte de fixation transversale bâbord 317 en sandwich, et la paire de bielles tribord 318a, 318b prend la patte de fixation transversale tribord 316 en sandwich.

L'articulation de la paire de bielles bâbord 319a, 319b à la patte de fixation transversale bâbord 317 est assurée par une liaison de type chape avec un deuxième axe d'articulation 326b emmanché dans le palier à rotule de la patte de fixation transversale bâbord 317 et de part et d'autre du palier à rotule, dans un manchon (non représenté) monté dans l'alésage traversant situé à la deuxième extrémité de chaque bielle de la paire de bielles bâbord 319a, 319b.

L'articulation de la paire de bielles tribord 318a, 318b à la patte de fixation transversale tribord 316 est assurée par une liaison de type chape avec un troisième axe d'articulation 326a emmanché dans le palier à rotule de la patte de fixation transversale tribord 316 et de part et d'autre du palier à rotule, dans un manchon (non représenté) monté dans l'alésage traversant situé à la deuxième extrémité de chaque bielle de la paire de bielles tribord 318a, 318b.

Les bielles sont ainsi toutes orientées chacune de bas en haut.

Avec l'assemblage d'un mât d'accrochage et d'un moteur, conforme à l'invention, les efforts en X et Z sont repris par l'intermédiaire du système d'articulation central 312 et les efforts Y sont repris par les systèmes d'articulation latéraux 318 et 319.

En comparaison de l'assemblage d'un mât d'accrochage avec un moteur selon l'art antérieur, et à dimension égale du moteur, des mesures ont permis d'établir que la distance maximale entre le longeron inférieur du mât d'accrochage et le moteur peut être réduite de moitié avec l'assemblage d'un mât d'accrochage avec un moteur, conforme à l'invention. Ainsi, grâce à l'invention, le moteur est situé au plus près de l'aile.

De façon préférentielle, et comme illustré sur les figures, la poutre 321 est ajourée et ne conserve de la matière que le long du chemin d'effort de ses parties en saillie. Dans l'exemple illustré sur les figures, pour faciliter les mouvements de techniciens devant fixer l'attache moteur avant 363 au mât d'accrochage, la longueur des deux panneaux latéraux bâbord et tribord, qui sont de même longueur, est inférieure à celles des longerons supérieur et inférieur. La longueur du longeron inférieur est inférieure à celle du longeron supérieur afin de permettre la fixation de l'attache moteur avant 363 au moteur et laisser de l'espace pour la manipulation des outils à cet effet.

Dans un second mode de réalisation, et contrairement au premier mode de réalisation, le corps de l'attache moteur avant 363 n'est pas constitué d'un corps monobloc, mais est constitué de deux ensembles bâbord-tribord symétriques l'un de l'autre par rapport au plan médian vertical V lorsque l'attache moteur avant 363 est fixée au mât d'accrochage et articulée au moteur. Le moteur est constitué de manière similaire à ce qui a été dit plus haut, en particulier pour ce qui concerne l'ensemble de ferrures avant 350.

L'ensemble bâbord comprend :
- une demi-poutre bâbord 321a allongée, emboîtée à l'avant et à bâbord de la structure primaire 304, et fixée à cette dernière La demi-poutre bâbord 321a s'étend d'avant en arrière selon un axe parallèle à l'axe longitudinal X. La demi-poutre bâbord 321a comprend une face avant plane 329 située à son extrémité avant, une face arrière située à son extrémité arrière et par laquelle la demi-poutre 321a est insérée, au moins en partie, dans la structure primaire 304. La face avant 329 est située dans un plan perpendiculaire à l'axe longitudinal X. La demi-poutre bâbord 321a comprend une face supérieure, une face inférieure, une face latérale bâbord et une face latérale tribord. La face supérieure, la face inférieure et la face latérale tribord sont planes. La demi-poutre bâbord 321a comprend sur chacune de ces faces inférieure, supérieure et bâbord, une semelle pour la fixation de la demi-poutre bâbord 321a à l'intérieur de la structure primaire 304. La fixation est effectuée par boulonnage ou soudage ou tout autre moyen connu.
- une patte de fixation plane 312a, dite patte de fixation de la demi-poutre bâbord 321 a, fixée à la face avant 329 de la demi-poutre bâbord 321a et s'étendant parallèlement au plan médian vertical V, dans le prolongement de la face tribord de la demi-poutre bâbord 321a et vers l'avant de la face avant 329 de la demi-poutre bâbord 321a. Ladite patte de fixation 312a est percée d'un alésage traversant dont l'axe d'alésage est parallèle à l'axe 320x orienté transversalement au plan médian vertical V. L'alésage traversant de la patte de fixation 312a de la demi-poutre bâbord 321a est équipé d'un palier à rotule.
- une extension plane en saillie bâbord, dite extension bâbord 307, et une paire de bielles droites, dite paire de bielles bâbord 319a, 319b, articulée à l'extension bâbord 307. La paire de bielles bâbord 319a, 319b prend l'extension bâbord 307 en sandwich. L'extension bâbord 307 prolonge la face avant 329 de la demi-poutre bâbord 321a sur le côté bâbord, au-delà du plan selon lequel s'étend le panneau latéral bâbord 304c. L'extension plane bâbord et la paire de bielles bâbord 319a, 319b articulée à ladite extension forment le système d'articulation latéral bâbord 319.

L'ensemble tribord comprend :
- une demi-poutre tribord 321 b allongée, emboîtée à l'avant et à tribord de la structure primaire 304, et fixée à cette dernière La demi-poutre tribord 321b s'étend d'avant en arrière selon un axe parallèle à l'axe longitudinal X. La demi-poutre tribord 321b comprend une face avant plane 329 située à son extrémité avant, une face arrière située à son extrémité arrière et par laquelle la demi-poutre est insérée, au moins en partie, dans la structure primaire 304. La face avant 329 est située dans un plan perpendiculaire à l'axe longitudinal X. La demi-poutre tribord 321b comprend une face supérieure, une face inférieure, une face latérale bâbord et une face latérale tribord. La face supérieure, la face inférieure et la face latérale bâbord sont planes. La demi-poutre tribord 321b comprend sur chacune de ces faces inférieure, supérieure et tribord, une semelle pour la fixation de la demi-poutre tribord 321b à l'intérieur de la structure primaire 304. La fixation est effectuée par boulonnage ou soudage ou tout autre moyen connu.
- une patte de fixation plane 312b, dite patte de fixation de la demi-poutre tribord 321b, fixée à la face avant 329 de la demi-poutre tribord 321b et s'étendant parallèlement au plan médian vertical V, dans le prolongement de la face bâbord de la demi-poutre tribord 321b et vers l'avant de la face avant 329 de la demi-poutre tribord 321b. Ladite patte de fixation 312b est percée d'un alésage traversant dont l'axe d'alésage est parallèle à un axe 320x orienté transversalement au plan médian vertical V. L'alésage traversant de la patte de fixation 312b de la demi-poutre tribord 321b est équipé d'un palier à rotule.
- une extension plane en saillie tribord, dite extension tribord 311, et une paire de bielles droites, dite paire de bielles tribord 318a, 318b articulée à l'extension tribord 311. La paire de bielles tribord 318a, 318b prend l'extension tribord 311 en sandwich. L'extension tribord 311 prolonge la face avant 329 de la demi-poutre tribord 321b sur le côté tribord, au-delà du plan selon lequel s'étend le panneau latéral tribord 304d. L'extension plane tribord et la paire de bielles tribord 318a, 318b articulée à ladite extension forment le système d'articulation latéral tribord 318.

Les demi-poutres 321a et 321b sont au contact l'une de l'autre, avec la face tribord de la demi-poutre bâbord 321a qui est en contact de la face bâbord de la demi-poutre tribord 321b. Les deux faces avant des demi-poutres 321a et 321b sont coplanaires et forment la face avant 329 du corps. La patte de fixation de la demi-poutre tribord 321b est en contact avec la patte de fixation de la demi-poutre bâbord 321a et les deux pattes de fixations des demi-poutres 321a et 321b forment ensemble le système d'articulation central de l'attache moteur avant 363.

Les pattes de fixation des demi-poutres bâbord 321a et tribord 321b sont reçues entre deux branches de la chape séparées l'une de l'autre par l'axe longitudinal V. L'articulation des pattes de fixation des demi-poutres bâbord 321a et tribord 321b à la chape 313 est effectuée au moyen d'un axe d'articulation 320 orienté transversalement au plan médian vertical V. Ledit axe d'articulation 320 est emmanché dans le palier à rotule de chacune des pattes de fixation des demi-poutres bâbord 321a et tribord 321b et de manière similaire de chaque côté de ce palier à rotule, dans les manchons montés dans les alésages traversants des branches de la chape.

Chacune des extensions bâbord 307 et tribord 311 est percée d'un alésage traversant. Chacun desdits alésages a un axe d'alésage respectivement 324g, 326g, 324d, 326d orienté parallèlement au plan médian vertical V, parallèlement à l'axe longitudinal X. Un alésage traversant bâbord sur l'extension bâbord 307 suit l'axe d'alésage 324g et un alésage traversant tribord sur l'extension tribord 311 suit l'axe d'alésage 324d. Les deux alésages traversants bâbord et tribord sont symétriques l'un de l'autre par rapport au plan médian V et chacun des alésages est équipé d'un palier à rotule.

Les bielles de la paire de bielles bâbord 319a, 319b de la paire de bielles tribord 318a, 318b sont identiques. Chaque bielle comprend deux extrémités, et un alésage traversant percé à chacune des extrémités de la bielle.

Chaque bielle de la paire de bielles bâbord 319a, 319b est montée articulée à sa première extrémité à l'extension bâbord 307 au moyen d'un axe d'articulation 324b s'étendant parallèlement à l'axe longitudinal X.

L'articulation entre la paire de bielles bâbord 319a, 319b et l'extension bâbord 307 est effectuée par une liaison de type chape avec un axe d'articulation 324b emmanché dans le palier à rotule de l'extension bâbord 307 et de chaque côté de ce palier à rotule, dans un manchon (non représenté) monté dans l'alésage traversant arrangé à la première extrémité de chaque bielle de la paire de bielles bâbord 319a, 319b.

Chaque bielle de la paire de bielles tribord 318a, 318b est montée articulée à sa première extrémité à l'extension tribord 311 au moyen d'un axe d'articulation 324a s'étendant parallèlement à l'axe longitudinal X.

L'articulation entre la paire de bielles tribord 318a, 318b et l'extension tribord 311 est effectuée par une liaison de type chape avec un axe d'articulation 324a emmanché dans le palier à rotule de l'extension tribord 311 et de chaque côté de ce palier à rotule, dans un manchon (non représenté) monté dans l'alésage traversant arrangé à la première extrémité de chaque bielle de la paire de bielles tribord 318a, 318b.

Préférentiellement, les axes de l'une des paires de bielles parmi la paire sont montés ajustés dans les alésages associés. C'est-à-dire que soit les axes 324a et 326a et la paire de bielles tribord 318a, 318b associée assurent le chemin primaire d'efforts, soit les axes bâbord 324b et 326b et la paire de bielles bâbord 319a, 319b associées assurent le chemin primaire d'efforts.

Selon ce mode de réalisation, les axes de l'autre paire sont montés avec un jeu radial dans les alésages associés, c'est-à-dire, les axes de l'autre paire assurent le chemin secondaire d'efforts, celui-ci ne s'engageant seulement qu'en cas d'une rupture totale ou partielle survenant sur le chemin primaire d'efforts.

L'articulation du système d'articulation latéral bâbord 319, respectivement tribord 318, au moteur est identique à ce qui a été décrit plus haut en relation avec le premier mode de réalisation.

L'invention a été décrite dans le cas où la chape 313 comprend deux paires de branches, avec une paire de branche de chaque côté de la chape. Sans sortir du cadre de la présente invention, la chape pourrait ne comprendre que deux branches, réparties de part et d'autre du plan médian vertical V. Dans tous les cas, le système d'articulation central est arrangé sur la face avant 329 et inséré entre deux branches séparées entre elles du plan vertical médian V et les branches de la chape 313 comprennent toutes un alésage traversant. Les axes desdits alésages sont alignés et les alésages traversant des branches sont sensiblement identiques avec un jeu radial différent. Chacun des alésages traversants des branches est équipé d'un manchon prévu pour recevoir l'axe d'articulation entre le système d'articulation central et la chape.

## Revendications

1. Assemblage d'un mât d'accrochage avec un moteur d'aéronef, le moteur s'étendant selon un axe longitudinal (X), le mât d'accrochage comprenant une structure primaire (304) sous forme d'un caisson s'étendant d'avant en arrière selon l'axe longitudinal (X), séparé en deux parties bâbord et tribord par un plan vertical médian longitudinal (V) passant par l'axe longitudinal (X), la structure primaire (304) comprenant un longeron supérieur, un longeron inférieur, ainsi qu'un panneau latéral bâbord (304c) et un panneau latéral tribord (304d) formant respectivement des faces supérieure, inférieure et latérales bâbord et tribord du caisson, l'assemblage comprenant, à l'arrière du caisson, une attache moteur arrière fixée d'une part au moteur et d'autre part au longeron inférieur, et à l'avant du caisson, une attache moteur avant (363) fixée d'une part au mât d'accrochage et d'autre part à un ensemble de ferrures (350) solidaires du moteur, **caractérisé en ce que** l'ensemble de ferrures (350) comprend d'une part une chape (313) avec des branches réparties de part et d'autre du plan vertical médian (V) et s'étendant parallèlement au plan vertical médian (V), et d'autre part deux pattes de fixation transversales, l'une bâbord du côté bâbord du plan médian vertical (V), l'autre tribord du côté tribord dudit plan, réparties symétriquement de part et d'autre dudit plan, l'attache moteur avant (363) comprenant un corps allongé s'étendant d'avant en arrière selon l'axe longitudinal (X), emboité en partie dans la structure primaire (304) et prolongeant cette dernière vers l'avant, le corps étant articulé, à l'extrémité avant du corps, à la chape au moyen d'un premier axe d'articulation (320) s'étendant transversalement au plan médian vertical (V) et dans l'espace compris entre un plan selon lequel s'étend le longeron supérieur et un plan selon lequel s'étend le longeron inférieur, et le corps étant articulé de part et d'autre du plan médian vertical (V), à la patte de fixation transversale bâbord (317), respectivement tribord, au moyen d'un deuxième, respectivement troisième axe d'articulation (326a) parallèle à l'axe longitudinal (X) .

2. Assemblage d'un mât d'accrochage avec un moteur d'aéronef selon la revendication 1, **caractérisé en ce que** le corps comprend une face avant plane (329) à son extrémité avant, ladite face s'étendant selon un plan transverse au plan médian vertical (V), le corps comprenant un système d'articulation central arrangé sur la face avant (329) du corps et inséré entre deux branches de la chape (313) séparées entre elles par le plan vertical médian (V), et articulé à la chape au moyen du premier axe d'articulation (320) traversant la chape et le système d'articulation central (312), et deux systèmes d'articulation latéraux, un bâbord (319) et l'autre tribord (318), arrangés respectivement l'un à bâbord, l'autre à tribord de la face avant (329) et symétriques l'un de l'autre par rapport au plan médian vertical (V), où le système d'articulation latéral bâbord (319) est articulé à la patte de fixation transversale bâbord (317) au moyen du deuxième axe d'articulation (326b) et le système d'articulation latéral tribord (318) est articulé à la patte de fixation transversale tribord (316) au moyen du troisième axe d'articulation (326a).

3. Assemblage d'un mât d'accrochage avec un moteur d'aéronef selon la revendication 2, **caractérisé en ce que** le corps est monobloc et comprend une poutre (321) ayant une face avant plane (329) formant la face avant (329) du corps et une face arrière formant la face arrière du corps, la poutre (321) comprenant une face supérieure (325), une face inférieure (327), une face latérale bâbord (322) et une face latérale tribord (324), la face supérieure (325) de la poutre (321) étant fixé au longeron supérieur (304a), la face inférieure (327) de la poutre (321) étant fixée au longeron inférieur (304b), la face latérale bâbord (322) de la poutre (321) étant fixée au panneau latéral bâbord (304c) et la face latérale tribord (324) de la poutre (321) étant fixée au panneau latéral tribord (304d).

4. Assemblage d'un mât d'accrochage avec un moteur d'aéronef selon la revendication 3, **caractérisé en ce que** le corps comprend une patte de fixation plane, dite patte de fixation centrale (315) fixée à la face avant (329) de la poutre (321) s'étendant parallèlement au plan médian vertical (V) et vers l'avant, ladite patte de fixation centrale (315) étant percée d'un alésage traversant dont l'axe d'alésage est parallèle à un axe (320x) orienté transversalement au plan médian vertical (V), l'alésage traversant étant équipé d'un palier à rotule et recevant le premier axe d'articulation (320).

5. Assemblage d'un mât d'accrochage avec un moteur d'aéronef selon la revendication 2, **caractérisé en ce que** le corps comprend deux ensembles symétriques l'un de l'autre par rapport au plan médian vertical (V), avec un ensemble bâbord et un ensemble tribord, où l'ensemble bâbord comprend une demi-poutre bâbord (321a) allongée, fixée à l'avant et à bâbord de la structure primaire (304), et où l'ensemble tribord comprend une demi-poutre tribord (321b) allongée, fixée à l'avant et à tribord de la structure primaire (304), chacune des demi-poutres (321a, 321b) comprend une face avant plane (329) s'étendant selon un plan transverse au plan médian vertical (V), une face arrière par laquelle la demi-poutre (321a, 321b) est insérée au moins en partie dans la structure primaire (304), une face supérieure (325), une face inférieure (327), une face latérale bâbord (322) et une face latérale tribord (324), la demi-poutre bâbord (321a) comprenant une face tribord plane et la demi-poutre tribord (321b) comprenant une face bâbord plane, les faces tribord de la demi-poutre bâbord (321a) et bâbord de la demi-poutre tribord (321b) étant en contact, les faces avant des deux demi-poutres (321a, 321b) étant coplanaires et forment la face avant (329) du corps.

6. Assemblage d'un mât d'accrochage avec un moteur d'aéronef selon la revendication 5, **caractérisé en ce que** chaque demi-poutre (321a, 321b) comprend une patte de fixation plane fixée à la face avant (329) de la demi-poutre (321a, 321b) s'étendant parallèlement au plan médian vertical (V) et vers l'avant, la patte de fixation plane de la demi-poutre tribord (321b) prolongeant la face bâbord de ladite demi-poutre tribord (321b), la patte de fixation plane de la demi-poutre bâbord (321a) prolongeant la face tribord de ladite demi-poutre bâbord (321a), chaque patte de fixation d'une demi-poutre (321a, 321b) est percée d'un alésage traversant dont l'axe d'alésage est parallèle à l'axe (320x) orienté transversalement au plan médian vertical (V), les alésages traversant des pattes de fixation des demi-poutres (321a, 321b) ayant leur axes alignés, chacun desdits alésages traversants étant équipé d'un palier à rotule et reçoit le premier axe d'articulation (320) .

7. Assemblage d'un mât d'accrochage avec un moteur d'aéronef selon l'une quelconque des revendications 1 à 6, **caractérisé en ce que** chacune des branches de la chape (313) comprend un alésage traversant dont l'axe d'alésage est parallèle à l'axe (320x) orienté transversalement au plan médian vertical (V), les alésages traversants des branches avec leur axes alignés, chacun desdits alésages traversants étant équipé d'un manchon et reçoit le premier axe d'articulation (320).

8. Assemblage d'un mât d'accrochage avec un moteur d'aéronef selon l'une quelconque des revendications 3 ou 5, **caractérisé en ce que** le système d'articulation latéral bâbord (319) comprend une extension plane en saillie bâbord, dite extension bâbord (307), et une paire de bielles droites, dite paire de bielles bâbord (319a, 319b), articulée à l'extension bâbord (307) et prenant en sandwich l'extension bâbord (307), l'extension bâbord (307) s'étendant dans un même plan que la face avant (329) du corps et prolongeant ladite face avant (329) du côté bâbord, au-delà du plan selon lequel s'étend le panneau latéral bâbord (304c), l'extension bâbord (307) comprenant un alésage traversant dont un axe d'alésage (324g) est orienté parallèlement au plan médian vertical (V) et est équipé d'un palier à rotule, chaque bielle de la paire de bielles bâbord (319a, 319b) comprenant deux extrémités, et un alésage traversant muni d'un manchon à chacune des extrémités de la bielle, chacune desdites bielles étant articulée à une première extrémité à l'extension bâbord (307) au moyen d'un quatrième axe d'articulation (324b) inséré dans le palier à rotule de l'extension bâbord (307) et de part et d'autre dudit palier, dans un manchon équipant l'alésage traversant situé à la première extrémité d'une bielle.

9. Assemblage d'un mât d'accrochage avec un moteur d'aéronef selon la revendication 8, **caractérisé en ce que** la patte de fixation transversale bâbord (317) comprend un alésage traversant dont l'axe d'alésage (326g) est parallèle à l'axe longitudinal (X) chaque bielle de la paire de bielles bâbord (319a, 319b) est montée articulée à la patte de fixation transversale bâbord (317) au moyen du deuxième axe d'articulation (326b), ledit deuxième axe d'articulation (326b) étant inséré dans la palier à rotule de la patte de fixation transversale bâbord (317) et de chaque côté de ce palier à rotule dans un manchon équipant l'alésage traversant situé à la seconde extrémité d'une bielle.

10. Assemblage d'un mât d'accrochage avec un moteur d'aéronef selon l'une quelconque des revendications 3 ou 5, **caractérisé en ce que** le système d'articulation latéral tribord (318) comprend une extension plane en saillie tribord, dite extension tribord (311), et une paire de bielles droites, dite paire de bielles tribord (318a, 318b) articulée à l'extension tribord (311) et prenant en sandwich l'extension tribord (311), l'extension tribord (311) s'étendant dans un même plan que la face avant (329) du corps et prolongeant ladite face avant (329) du côté tribord, au-delà du plan selon lequel s'étend le panneau latéral tribord, l'extension tribord (311) comprenant un alésage traversant (324d) dont un axe d'alésage est orienté parallèlement au plan médian vertical (V) et est équipé d'un palier à rotule, chaque bielle de la paire de bielles tribord (318a, 318b) comprenant deux extrémités, et un alésage traversant muni d'un manchon à chacune des extrémités de la bielle, chacune desdites bielles étant articulée à une première extrémité à l'extension tribord (311) au moyen d'un cinquième axe d'articulation (324a) inséré dans le palier à rotule de l'extension tribord (311) et de part et d'autre dudit palier, dans un manchon équipant l'alésage traversant situé à la première extrémité d'une bielle.

11. Assemblage d'un mât d'accrochage avec un moteur d'aéronef selon la revendication 10, **caractérisé en ce que** la patte de fixation transversale tribord (316) comprend un alésage traversant dont l'axe d'alésage (326d) est parallèle à l'axe longitudinal (X), chaque bielle de la paire de bielles tribord (318a, 318b) est montée articulée à la patte de fixation transversale tribord (316) au moyen du troisième axe d'articulation (326a), ledit troisième axe d'articulation (326a) étant inséré dans la palier à rotule de la patte de fixation transversale tribord (316) et de chaque côté de ce palier à rotule dans un manchon équipant l'alésage traversant situé à la seconde extrémité d'une bielle.

12. Aéronef comprenant un assemblage d'un mât d'accrochage avec un moteur de l'aéronef selon l'une quelconque des revendications précédentes.
